# EUROPÄISCHE PATENTANMELDUNG

(11) **EP 4 524 445 A1**
(43) Veröffentlichungstag der Anmeldung: **19.03.2025**
(21) Anmeldenummer: 24198090.3
(22) Anmeldetag: 03.09.2024
(51) Int. Cl.: F16L 55/28, B23Q 3/155

(54) **KANALINSPEKTIONS- UND/ODER WARTUNGSSYSTEM MIT EINEM GERÄTEWECHSELSYSTEM**

(30) Priorität: 13.09.2023 DE 102023124742
(71) Anmelder: iPEK International GmbH, 87477 Sulzberg (DE)
(72) Erfinder: Tolsdorf, Vreni, 87439 Kempten (DE); Wiese, Johannes, 87509 Immenstadt (DE); Schweizer, Simon, 87435 Kempten (DE); Krämer, Anton, 87437 Kempten (DE)
(74) Vertreter: 2s-ip Schramm Schneider Bertagnoll Patent- und Rechtsanwälte Part mbB

(57) **Zusammenfassung**

Bereitgestellt wird ein Kanalinspektions- und/oder Wartungssystem, umfassend ein Trägersystem, insbesondere Fahrwagen, wobei ein Hebearm des Trägersystems derart ausgestaltet ist, dass ein daran angeordnete Geräteträger zwischen einer Anzahl von Gerätewechselpositionen und zumindest einer Geräteeinsatzposition bewegbar ist, und an dem Trägersystem ein Gerätemagazin zur Aufnahme einer Anzahl von Geräten angeordnet ist

## Beschreibung

### Gebiet der Erfindung

Die Erfindung betrifft ein Kanalinspektions- und/oder Wartungssystem, umfassend ein Trägersystem, wobei das Kanalinspektions- und/oder Wartungssystem angepasst ist, im Betrieb einen Gerätewechsel vorzunehmen. Das Trägersystem umfasst insbesondere einen Fahrwagen.

### Hintergrund der Erfindung

Kanalinspektionssysteme bzw. Kanalwartungssysteme sind aus dem Stand der Technik bekannt, beispielsweise aus der EP 2 689 227 A1. **Fig. 1** zeigt das aus der EP 2 689 227 A1 bekannte System. Das System besteht aus einem Fahrwagen F und einem daran angeordneten Heber H. An dem freien Ende des Hebers H ist hier eine Inspektionskamera IK angeordnet. Die Inspektionskamera weist eine für sie spezifische Schnittstelle auf. Das freie Ende des Hebers H weist eine zur Schnittstelle der Inspektionskamera korrespondierende spezifische Schnittstelle auf. Die Inspektionskamera kann so von dem Heber gelöst und wieder befestigt werden.

Nachteilig hierbei ist, dass die Schnittelle zwischen Inspektionskamera und Heber spezifisch für die Inspektionskamera ist. Das bedeutet, dass nur Inspektionskameras mit genau einer solchen Schnittstelle an dem Heber befestigt werden können. Weist eine Kamera eine andere Schnittstelle auf, ist es üblich einen entsprechend angepassten Heber zu verwenden. Das heißt, für Kameras mit verschiedenen Schnittstellen werden verschiedene Heber vorgesehen, die gegebenenfalls ausgetauscht werden müssen.

Ein weiterer Nachteil besteht darin, dass zum Wechseln der Kamera das System aus dem Kanal geholt werden muss und dann nach einem Wechsel der Kamera und des Hebers wieder in den Kanal gebracht werden kann. Lange Rüstzeiten können hierbei zu einem erheblichen Zeitverlust bei einer Kanalinspektion führen.

### Aufgabe der Erfindung

Aufgabe der vorliegenden Erfindung ist es daher, Lösungen bereitzustellen, die es ermöglichen ein Gerät im laufenden Betrieb, also wenn sich das System im Kanal befindet, zu wechseln.

### Erfindungsgemäße Lösung

Gelöst wird diese Aufgabe mit einem System nach den unabhängigen Ansprüchen. Vorteilhafte Ausgestaltungen der Erfindung sind in den jeweiligen abhängigen Ansprüchen angegeben.

Bereit gestellt wird demnach ein Kanalinspektions- und/oder Wartungssystem, umfassend ein Trägersystem, insbesondere Fahrwagen, wobei
- an dem Trägersystem ein Hebearm angeordnet ist, an dessen freien Ende ein Geräteträger angeordnet ist,
- der Geräteträger einen ersten Adapter aufweist,
- der Hebearm derart ausgestaltet ist, dass der daran angeordnete Geräteträger zwischen einer Anzahl von Gerätewechselpositionen und zumindest einer Geräteeinsatzposition bewegbar ist,
- an dem Trägersystem ein Gerätemagazin zur Aufnahme einer Anzahl von Geräten angeordnet ist, wobei die Geräte jeweils einen zweiten Adapter aufweisen, die mit dem ersten Adapter des Geräteträgers korrespondieren, wobei mittels des ersten Adapters und des zweiten Adapters eines Gerätes das Gerät an dem Geräteträger lösbar befestigbar ist,
- der Hebearm mit einem am ersten Adapter befestigten Gerät in eine erste Gerätewechselposition bewegbar ist, wobei der erste Adapter ausgestaltet ist, in der ersten Gerätewechselposition das am ersten Adapter befestigte Gerät von dem ersten Adapter zu lösen, und
- der Hebearm ohne einem am ersten Adapter befestigten Gerät in eine zweite Gerätewechselposition bewegbar ist, wobei der erste Adapter ausgestaltet ist, in der zweiten Gerätewechselposition ein im Gerätemagazin aufgenommenes Gerät an dem ersten Adapter zu befestigen.

Damit wird es möglich im laufenden Betrieb (im Kanal) verschiedene Geräte zu nutzen, ohne dass das Kanalinspektions- und/oder Wartungssystem aus dem Kanal genommen wird, um einen Gerätewechsel vornehmen zu können.

Das Kanalinspektions- und/oder Wartungssystem kann eine dem ersten Adapter und dem zweiten Adapter zugeordnete Arretiereinrichtung aufweisen, mit der ein an dem ersten Adapter angeordnetes Gerät temporär an dem ersten Adapter arretierbar ist.

Vorteilhaft ist es, wenn die Arretiereinrichtung zumindest ein an dem ersten Adapter angeordnetes steuerbares Arretiermittel umfasst, wobei das Arretiermittel bezüglich des Geräteträgers zwischen einer Verriegelungsposition und einer Entriegelungsposition bewegbar ist.

In dem Gerätemagazin kann für jedes darin aufgenommene Gerät eine vorbestimmte Position innerhalb des Gerätemagazins vorgesehen sein. Damit ist ein vollautomatischer Gerätewechsel einfach realisierbar.

Das Gerätemagazin kann für ein darin aufgenommenes Gerät eine Sicherungseinrichtung aufweisen, mit der das Gerät nach Aufnahme in das Gerätemagazin in dem Gerätemagazin lösbar arretierbar ist.

Die Sicherungseinrichtung kann als steuerbare Sicherungseinrichtung ausgestaltet sein, die derart steuerbar, dass
- ein Lösen einer Arretierung eines aus dem Gerätemagazin mit dem Hebearm zu entnehmenden Gerätes erst erfolgt, wenn das Gerät an dem ersten Adapter befestigt ist, und
- ein Arretieren eines in das Gerätemagazin mit dem Hebearm abzulegenden Gerätes erfolgt, bevor das Gerät von dem ersten Adapter gelöst wird.

Vorteilhaft ist es, wenn der Hebearm so ausgestaltet ist, dass der Geräteträger hinsichtlich mehrerer Freiheitsgrade frei in einem Kanal oder Rohr positionierbar ist.

Bereit gestellt wird ferner ein Kanalinspektions- und/oder Wartungssystem, umfassend ein Trägersystem, insbesondere Fahrwagen oder Transportschlitten, wobei an dem Trägersystem ein Gerätemagazin zur Aufnahme einer Anzahl von Geräten angeordnet ist. Ein Gerätemagazin im Sinne der Erfindung ist eine Ablage, in der verschiedene Geräte abgelegt und wieder entnommen werden können.

Vorteilhaft kann es sein, wenn bei dem Kanalinspektions- und/oder Wartungssystem
- an dem Trägersystem ein Hebearm angeordnet ist, an dessen freien Ende ein Geräteträger angeordnet ist,
- der Geräteträger einen ersten Adapter aufweist,
- der Hebearm derart ausgestaltet ist, dass der daran angeordnete Geräteträger zwischen einer Anzahl von Gerätewechselpositionen und zumindest einer Geräteeinsatzposition bewegbar ist,
- die Geräte jeweils einen zweiten Adapter aufweisen, die mit dem ersten Adapter des Geräteträgers korrespondieren, wobei mittels des ersten Adapters und des zweiten Adapters eines Gerätes das Gerät an dem Geräteträger lösbar befestigbar ist,
- der Hebearm mit einem am ersten Adapter befestigten Gerät in eine erste Gerätewechselposition bewegbar ist, wobei der erste Adapter ausgestaltet ist, in der ersten Gerätewechselposition das am ersten Adapter befestigte Gerät von dem ersten Adapter zu lösen, und
- der Hebearm ohne einem am ersten Adapter befestigten Gerät in eine zweite Gerätewechselposition bewegbar ist, wobei der erste Adapter ausgestaltet ist, in der zweiten Gerätewechselposition ein im Gerätemagazin aufgenommenes Gerät an dem ersten Adapter zu befestigen.

Bereit gestellt wird durch die Erfindung ferner ein Fahrwagen eines Kanalinspektions- und/oder Wartungssystems, wobei
- an dem Fahrwagen ein Gerätemagazin angeordnet ist oder
- der Fahrwagen ein Gerätemagazin aufweist
zur Aufnahme einer Anzahl von Geräten.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:

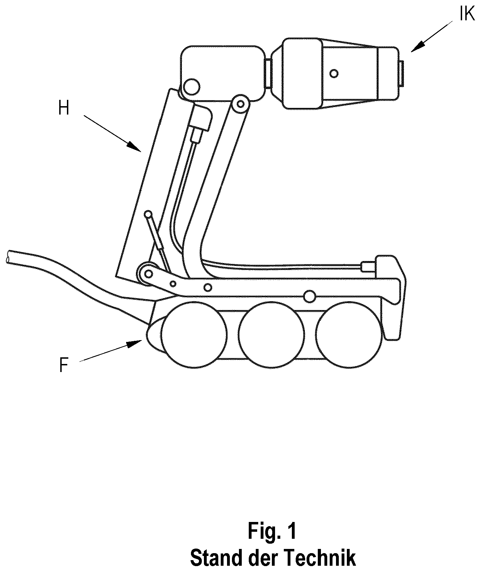

- Fig. 1: ein aus dem Stand der Technik bekanntes Kanalinspektionssystem mit einem Heber, an dem eine Inspektionskamera angeordnet ist;
- Fig. 2: ein erfindungsgemäßes Kanalinspektions- und/oder Wartungssystem mit einem Geräteträger und eine Detailansicht eines erfindungsgemäßen Geräteträgers;
- Fig. 3: Adapter eines erfindungsgemäßen Geräteträgers gemäß einer ersten Ausführungsform;
- Fig. 4: Adapter eines erfindungsgemäßen Geräteträgers gemäß einer weiteren Ausführungsform;
- Fig. 5: ein erfindungsgemäßes Kanalinspektions- und/oder Wartungssystem mit einem am Trägersystem angeordneten Gerätemagazin;
- Fig. 6: eine schematische Detailansicht eines Gerätemagazins; und
- Fig. 7: ein Blockdiagramm eines erfindungsgemäßen Kanalinspektions- und/oder Wartungssystems.

### Detaillierte Beschreibung der Erfindung

Die vorliegende Erfindung ermöglicht es, mittels des Geräteträgers verschiedene Geräte an einem Trägersystem, insbesondere Fahrwagen oder Schiebeaal, lösbar zu befestigen, ohne dass Module oder Komponenten des Trägersystems angepasst oder ausgetauscht werden müssen. Ermöglicht wird dies durch die Adapter und Schnittstelleneinrichtungen des Geräteträgers und der Geräte. Bei den Geräten kann es sich um Geräte verschiedener Geräteklassen handeln, etwa Werkzeuge oder Inspektionseinheiten. Die Werkzeuge können beispielsweise Fräser, Greifwerkzeuge, Spüldüsen oder dergleichen umfassen. Die Inspektionseinheiten können etwa Kameras oder sonstige Sensorsysteme umfassen.

Erfindungsgemäß können die Geräte aber auch Einrichtungen und Systeme umfassen, die nach einer Inspektion oder Wartung im Kanal verbleiben, etwa RFID-Komponenten, Überwachungseinrichtungen oder dergleichen.

Das Gerätemagazin und der Geräteträger ermöglichen es in vorteilhafter Weise verschiedene Geräte mit in den Kanal zu nehmen. Das Kanalinspektions- und/oder Wartungssystem kann so bei Bedarf einen Gerätewechsel durchführen, ohne dass das System aus dem Kanal geholt werden muss. Der Geräteträger kann auch Einrichtungen und Systeme aufnehmen, die nach einer Inspektion oder Wartung im Kanal verbleiben - das Gerätemagazin ist vorteilhafter Weise angepasst, auch solche Einrichtungen und Systeme mit in den Kanal zu nehmen.

"Mit in den Kanal zu nehmen" bedeutet, dass das Trägersystem, an dem das Gerätemagazin angeordnet ist, zusammen mit den im Gerätemagazin aufgenommen Geräten in den Kanal gebracht und dort an die gewünschte Stelle im Kanal verbracht werden kann.

In einer Ausgestaltung der Erfindung können der Geräteträger, der einen Adapter und eine Schnittstelleneinrichtung aufweist, und das Gerätemagazin kombiniert werden, sodass in einem weiteren Aspekt der Erfindung durch die Erfindung auch ein Kanalinspektions- und/oder Wartungssystem bereitgestellt wird, umfassend ein Trägersystem, insbesondere Fahrwagen, und eine Anzahl unterschiedlicher Geräte wobei
- an dem Trägersystem ein Hebearm angeordnet ist, an dessen freien Ende ein Geräteträger angeordnet ist,
- der Geräteträger einen ersten Adapter aufweist,
- der Hebearm derart ausgestaltet ist, dass der daran angeordnete Geräteträger zwischen einer Anzahl von Gerätewechselpositionen und zumindest einer Geräteeinsatzposition bewegbar ist,
- an dem Trägersystem ein Gerätemagazin zur Aufnahme der Anzahl von Geräten angeordnet ist, wobei die Geräte jeweils einen zweiten Adapter aufweisen, die mit dem ersten Adapter des Geräteträgers korrespondieren, wobei mittels des ersten Adapters und des zweiten Adapters eines Gerätes das Gerät an dem Geräteträger lösbar befestigbar ist,
- der Hebearm mit einem am ersten Adapter befestigten Gerät in eine erste Gerätewechselposition bewegbar ist, wobei der erste Adapter ausgestaltet ist, in der ersten Gerätewechselposition das am ersten Adapter befestigte Gerät von dem ersten Adapter zu lösen, und
- der Hebearm ohne einem am ersten Adapter befestigten Gerät in eine zweite Gerätewechselposition bewegbar ist, wobei der erste Adapter ausgestaltet ist, in der zweiten Gerätewechselposition ein im Gerätemagazin aufgenommenes Gerät an dem ersten Adapter zu befestigen.
- der Geräteträger eine erste Schnittstelleneinrichtung aufweist und die Anzahl unterschiedlicher Geräte jeweils eine zweite Schnittstelleneinrichtung aufweisen, wobei die erste Schnittstelleneinrichtung mit der zweiten Schnittstelleneinrichtung korrespondiert,
- die erste Schnittstelleneinrichtung eine Anzahl von ersten Anschlüssen aufweist und die zweite Schnittstelleneinrichtung eine Anzahl von zweiten Anschlüssen aufweist, wobei zumindest ein Anschluss der ersten Anschlüsse mit zumindest einem Anschluss der zweiten Anschlüsse koppelbar ist, wenn ein Gerät der Anzahl unterschiedlicher Geräte an dem Geräteträger befestigt wird.

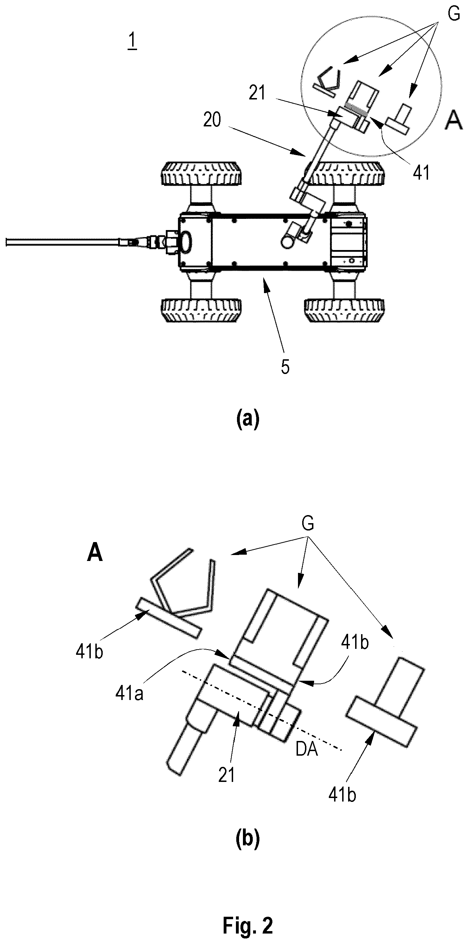

**Fig. 2** zeigt ein erfindungsgemäßes Kanalinspektions- und/oder Wartungssystem 1 mit einem Geräteträger 21 (Abbildung (a)) und eine Detailansicht eines erfindungsgemäßen Geräteträgers (Abbildung (b)).

Das Kanalinspektions- und/oder Wartungssystem 1 umfasst ein Trägersystem 5, das hier als Fahrwagen ausgestaltet ist. Anstelle eines Fahrwagens kann aber auch ein Trägerschlitten oder dergleichen verwendet werden.

An dem Fahrwagen 5 ist ein Hebearm 20 angeordnet, der vorteilhafterweise aus mehrere gelenkig miteinander gekoppelte Armabschnitte aufweist. Vorteilhaft ist es hierbei, wenn die Armabschnitte relativ zueinander bewegbar sind, und der Hebearm 20 als solches relativ zum Fahrwagen 5 bewegbar ist. Weier vorteilhaft ist es, wenn jedem Armabschnitt ein Stellmittel zugeordnet ist, mit dem der Armabschnitt relativ zu jenem Armabschnitt, an dem er angelenkt ist, bewegt werden kann. Damit kann das freie Ende des Hebearms 20 beliebig bewegt werden.

An dem freien Ende des Hebearms 20 ist ein Geräteträger 21 angeordnet, der bei Bedarf (also optional) auch von dem Hebearm 20 lösbar sein kann, etwa zu Wartungszwecken.

Der Geräteträger 21 kann um eine Drehachse DA drehbar ausgestaltet sein, sodass bei Bedarf das an dem Geräteträger 21 angeordnete Gerät um diese Achse DA geschwenkt werden kann.

Erfindungsgemäß ist es vorgesehen, dass an dem Geräteträger 21 verschiedene Geräte G angeordnet, insbesondere lösbar angeordnet, werden können. Hierzu ist ein Adaptersystem 41 vorgesehen, der im Wesentlichen einen ersten Adapter 41a und einen zweiten Adapter 41b umfasst, wobei der erste Adapter 41a dem Geräteträger 21 zugeordnet ist, und der zweite Adapter 41b dem Gerät G zugeordnet ist.

Die beiden Adapter, das heißt der Adapter 21a des Geräteträgers 21 und der Adapter 21b des Geräts, sind so ausgestaltet, dass sie zueinander korrespondieren und das Gerät vorzugsweise temporär an dem Geräteträger arretierbar ist. Das Adaptersystem 41 kann hierzu eine hier nicht gezeigte Arretiereinrichtung umfassen. Vorteilhaft ist es, wenn die Arretiereinrichtung zumindest ein an dem ersten Adapter, d.h. an dem Adapter 41a des Geräteträgers, angeordnetes steuerbares Arretiermittel umfasst. Das Arretiermittel kann so mit einer Steuereinrichtung des Fahrwagens (Trägersystems) gekoppelt sein, die dann den Arretiervorgang steuern und überwachen kann.

Das Arretiermittel kein beispielsweise einen radial verlaufenden Zapfen umfassen, der beim Arretieren in Eingriff mit einem am Adapter 41b des Gerätes vorhandenen und dort radial verlaufenden Sackloch gebracht werden kann. Gemäß einem anderen Beispiel kann das Arretiermittel auch eine Art Klemmvorrichtung umfassen, in die der Adapter des Geräts geklemmt werden kann. Grundsätzlich kann jede Art von Arretiermittel verwendet werden, solange sie geeignet ist, das Gerät mit dem Adapter des Geräts an dem Adapter des Geräteträgers zu arretieren.

Um eine falsche (nicht lagerichtige) Aufnahme eines Gerätes durch den Geräteträger zu verhindern, hat es sich als vorteilhaft herausgestellt, wenn die beiden Adapter 21a und 21b derart ausgestaltet sind, dass ein Anordnen eines Gerätes an dem Geräteträger nur in einer vorbestimmten Lage des Adapters 41b des Gerätes relativ zum Adapter 41a Geräteträgers möglich ist. Das kann beispielsweise durch die Geometrie der beiden Adapter erreicht werden, oder durch Positionierzapfen am Adapter des Geräteträgers (oder am Adapter des Gerätes), die in Positionierlöcher am Adapter des Gerätes (oder am Adapter des Geräteträgers) in Eingriff bringbar sind - selbstverständlich sind die Positionierzapfen und Positionierlöcher so angeordnet, dass sie nur einer vorbestimmten Lage der beiden Adapter zueinander zusammengeführt werden können.

Das Adaptersystem kann so ausgestaltet sein, dass der Adapter 41a des Geräteträgers und der Adapter 41b des Geräts fluiddicht (gas- und flüssigkeitsdicht) miteinander koppelbar sind. Eindringen von Schmutz, Flüssigkeiten oder Gase in den Zwischenbereich des Adaptersystems während einer Kanalinspektion oder Kanalwartung kann so vermieden werden.

Abbildung (a) der Fig. 2 zeigt beispielhaft drei Geräte G, die mittels der beiden Adapter 21a und 21b an dem Geräteträger 21 angeordnet werden können. Aufgrund der erfindungsgemäß ausgestalteten Schnittstelleneinrichtung, die nachfolgend beschrieben wird, können Geräte unterschiedlicher Geräteklassen (Sensorsysteme, Kameras, normales Werkzeug, fluidführende Werkzeuge, wie Spüldüsen, und dergleichen) an dem Geräteträger lösbar befestigt werden.

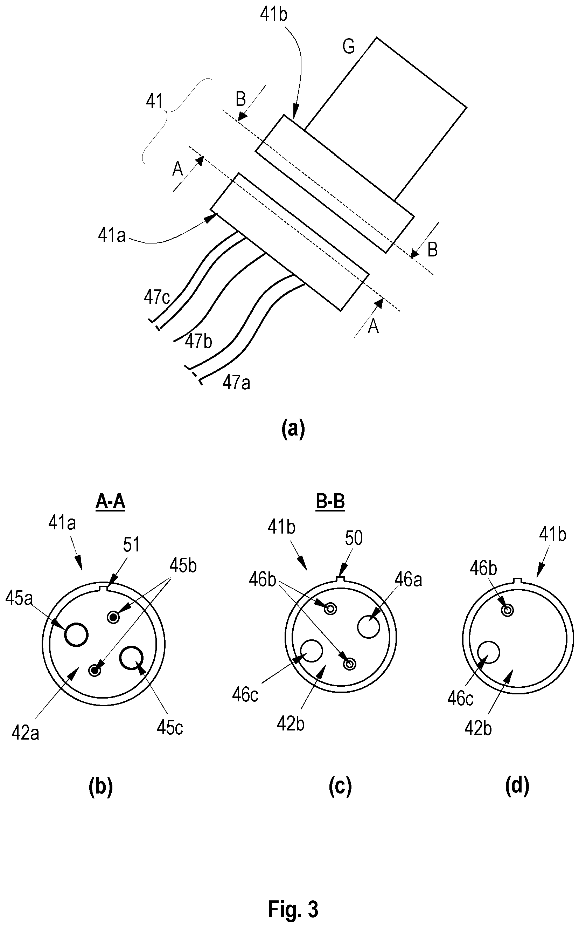

Fig. 3 zeigt ein Adaptersystem 41 eines erfindungsgemäßen Geräteträgers gemäß einer ersten Ausführungsform. Abbildung (a) zeigt schematisch das Adaptersystem 41, Abbildung (b) zeigt einen Schnitt des ersten Adapters 41a entlang der Schnittachse A-A, Abbildung (c) zeigt einen Schnitt des zweiten Adapters 41b entlang der Schnittachse B-B, und Abbildung (d) zeigt eine alternative Ausgestaltung des zweiten Adapters.

Das Adaptersystem 41 umfasst einen dem Geräteträger zugeordneten Adapter 41a und einen dem Gerät G zugeordneten Adapter 41b, wobei der Geräteträger in Fig. 3 nicht gezeigt ist. "Dem Geräteträger zugeordnet" bzw. dem "dem Gerät zugeordnet" bedeutet, dass der Geräteträger / das Gerät den jeweiligen Adapter aufweist, oder der jeweilige Adapter integraler Bestandteil des Geräteträgers / des Geräts ist.

Bei dem in Fig. 3 gezeigten Adaptersystem weisen die Adapter 41a und 41b jeweils einen weitgehend runden Querschnitt auf, wobei der Adapter 21b des Gerätes in Eingriff mit dem Adapter 21a des Geräteträgers bringbar ist. Der Außendurchmesser des Adapters 21b entspricht dabei im Wesentlichen dem Innendurchmesser des Adapters 21a. Selbstverständlich ist auch eine umgekehrte Konfiguration mit entsprechenden Durchmessern möglich - der Adapter 41a also in den Adapter 41b eingreift.

Die beiden Adapter 41a, 41b weisen Positioniermittel auf, mit denen gewährleistet wird, dass die beiden Adapter nur in einer bestimmten Position relativ zueinander in Eingriff bringbar sind. Der zweite Adapter 41b weist hierzu einen radial nach außen stehenden Positionierzapfen 50 auf, der in eine entsprechende Aussparung 51 am ersten Adapter 41a in eingreift, wenn die beiden Adapter 41a, 41b zusammengeführt werden. Selbstverständlich sind auch andere Positioniermittel möglich, die gewährleisten, dass beide Adapter nur in einer bestimmten Weise zusammengeführt werden können. Eine weitere Art der Positioniermittel ist die Geometrie der Adapter - beispielsweise können der Außenumfang des zweiten Adapters und der Innenumfang des ersten Adapters eine Polygonform aufweisen, bei der das Zusammenfügen der beiden Adapter nur bei einer bestimmten Position relativ zueinander möglich ist.

Erfindungsgemäß weist der Geräteträger eine erste Schnittstelleneinrichtung 42a auf und die Geräte G weisen jeweils eine zweite Schnittstelleneinrichtung 42b auf. Beide Schnittstelleneinrichtungen 42a, 42b sind so ausgestaltet, dass sie miteinander korrespondieren. Die erste Schnittstelleneinrichtung 42a weist hierzu eine Anzahl von ersten Anschlüssen 45a; 45b; 45c auf und die zweite Schnittstelleneinrichtung 42b weist eine Anzahl von zweiten Anschlüssen 46a; 46b; 46c auf, wobei zumindest ein Anschluss der ersten Anschlüsse 45a; 45b; 45c mit zumindest einem Anschluss der zweiten Anschlüsse 46a; 46b; 46c koppelbar ist, wenn ein Gerät an dem Geräteträger (mittels der Adapter 41a, 41b) befestigt wird. Das bedeutet, dass die beiden Schnittstelleneinrichtungen 42a, 42b auch eine unterschiedliche Anzahl von Anschlüssen aufweisen kann, solange ein Anschluss der ersten Schnittstelleneinrichtung 42a mit einem Anschluss der zweiten Schnittstelleneinrichtung 42b koppelbar ist, wenn ein Gerät an dem Geräteträger befestigt wird.

Abbildung (b) zeigt einen ersten Adapter 41a eines Geräteträgers und Abbildung (c) zeigt einen zweiten Adapter 41b eines Gerätes. Diese beiden Adapter bzw. die beiden Schnittstelleneinrichtungen 42a und 4b weisen hier jeweils vier Anschlüsse 45a; 45b; 45c bzw. 46a; 46b; 46c auf, wobei die Anschlüsse 45b bzw. 46b hier doppelt vorhanden sind. Die Anschlüsse der ersten Schnittstelleneinrichtungen 42a sind mit jeweils einem Anschluss der zweiten Schnittstelleneinrichtungen 42b koppelbar, also zum Beispiel ist Anschluss 45a mit Anschluss 46a koppelbar, Anschluss 45b ist mit Anschluss 46b koppelbar und Anschluss 45c ist mit Anschluss 46c koppelbar.

Die Abbildung (d) zeigt eine alternative Ausgestaltung der Schnittstelleneinrichtungen 42b des zweiten Adapters 41b. Diese Schnittstelleneinrichtungen 42b gemäß Abbildung (d) ist dennoch mit dem Schnittstelleneinrichtungen 42a gemäß Abbildung (b) koppelbar, da der Anschluss 46b mit dem Anschluss 45b und der Anschluss 46c mit dem Anschluss 45c koppelbar sind.

Bei den Anschlüssen 45b kann es sich um Anschlüsse zur Übertragung von elektrischer Energie und/oder um Anschlüsse zur Übertragung von Daten handeln. Diese beiden Abschlüsse sind nach der Art eines Steckersystems ausgestaltet, sodass der Anschluss 45b in den Anschluss 46b eingreift, um so einen elektrischen Kontakt zwischen den beiden Anschlüssen herzustellen. Alternativ können die Anschlüsse zur Übertragung von elektrischer Energie und/oder zur Übertragung von Daten auch als kontaktlose Anschlüsse ausgeführt werden, wenn etwa die elektrische Energie / die Daten auf induktiver oder kapazitiver Basis übertragen werden.

Bei den Anschlüssen 45a, 46a kann es sich um hydraulische Anschlüsse handeln, die beispielsweise verwendet werden können, um ein Fluid, z.B. Wasser, einem als Reinigungsdüse ausgestalteten Gerät G zuzuführen. Die hydraulischen Anschlüsse sind vorzugsweise so ausgestaltet, dass sich druck- und fluiddicht gekoppelt werden können.

Bei den Anschlüssen 45c, 46c kann es sich um pneumatische Anschlüsse handeln, die beispielsweise verwendet werden können, um ein Gas, z.B. Luft, einem Gerät G zuzuführen. Beispielsweise kann das dem Gerät zugeführte Gas verwendet werden, um ein am Gerät vorhandenes Stellmittel pneumatisch zu betreiben. Die pneumatischen Anschlüsse sind vorzugsweise so ausgestaltet, dass sich druckdicht gekoppelt werden können.

Wir der Adapter 41b gemäß Abbildung (d) mit dem Adapter 41a gemäß Abbildung (b) gekoppelt, dann werden die Anschlüsse 46b und 46c der Schnittstelleneinrichtung 42b mit den entsprechenden Anschlüssen 45b bzw. 45c der Schnittstelleneinrichtung 42a gekoppelt. Die Anschlüsse 45a und der andere der beiden Anschlüsse 45b werden für das verwendete Gerät nicht benötigt. In diesem Fall kann es vorteilhaft sein, jedenfalls für den Anschluss 45a einen Absperrmittel, etwa in Form eines Ventils vorzusehen.

Die Anschlüsse sind jeweils mit entsprechenden Leitungen bzw. Versorgungsleitungen 47a, 47b, 47c gekoppelt. Beispielsweise können die Anschlüsse 45a (hydraulischer Anschluss) und 45c (pneumatischer Anschluss) jeweils mit einem Hochdruckschlauch gekoppelt sein. Die Anschlüsse 45b können mit Daten und/oder Stromleitungen gekoppelt sein.

Wird bei einem Adapter 41b gemäß Abbildung (d) der Anschluss 45a des Adapters 41a gemäß Abbildung (b) nicht benötigt, kann das vorstehend Absperrmittel auch in der entsprechenden Versorgungsleitung vorgesehen sein.

Ein als Kamera ausgestaltetes Gerät kann beispielsweise eine Luftdüse aufweisen, mit der vor der Kameralinse eine Art Luftvorhang gebildet wird, der verhindert, dass im Betrieb der Kamera Staub oder andere Partikel an die Linse gelangen. Die Schnittstelleneinrichtung 42b einer solchen Kamera kann einen Datenschluss, einen Stromanschluss und einen pneumatischen Anschluss aufweisen. Dennoch kann diese Schnittstelleneinrichtung 42b mit der in Abbildung (b) gezeigten Schnittstelleneinrichtung 42a gekoppelt werden (der hydraulische Anschluss 45a ist zwar vorhanden, wird aber nicht benötigt).

Die Schnittstelleneinrichtung 42b eines als Spüldüse mit Kamera ausgestalteten Gerät kann einen Datenschluss, einen Stromanschluss und einen hydraulischen Anschluss aufweisen. Dennoch kann diese Schnittstelleneinrichtung 42b mit der in Abbildung (b) gezeigten Schnittstelleneinrichtung 42a gekoppelt werden (der pneumatische 45c Anschluss ist zwar vorhanden, wird aber nicht benötigt).

In einem weiteren Beispiel wird als Gerät eine Kamera ohne Zusatzfunktion als Gerät verwendet. In diesem Fall kann die Schnittstelleneinrichtung 42b einen Datenschluss und einen Stromanschluss aufweisen. Dennoch kann diese Schnittstelleneinrichtung 42b mit der in Abbildung (b) gezeigten Schnittstelleneinrichtung 42a gekoppelt werden (der pneumatische Anschluss 45c und der hydraulische Anschluss 45a sind zwar vorhanden, werden aber nicht benötigt).

In gleicher Weise kann ein Spülkopf ohne weitere Funktion als Gerät verwendet werden. In diesem Fall ist es ausreichend, wenn die Schnittstelleneinrichtung 42b lediglich einen hydraulischen Anschluss aufweist. Dennoch kann diese Schnittstelleneinrichtung 42b mit der in Abbildung (b) gezeigten Schnittstelleneinrichtung 42a gekoppelt werden (der pneumatische Anschluss 45c und die beiden Anschlüsse 45b sind zwar vorhanden, werden aber nicht benötigt).

In einer Ausgestaltung der Erfindung können die Geräte jeweils eine Kennung aufweisen, die es dem Kanalinspektions- und/oder Wartungssystem ermöglicht festzustellen, welches Gerät aktuell an dem Geräteträger angeordnet ist.

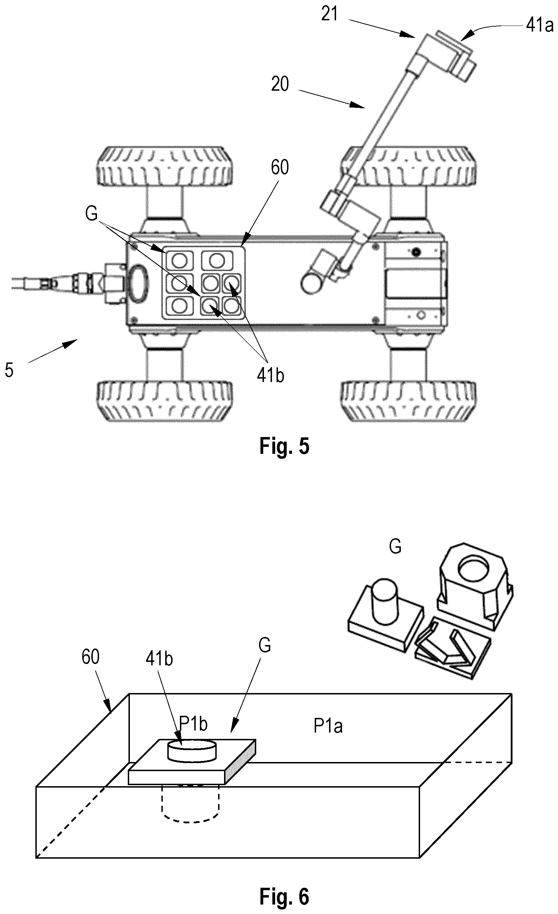

Die Kennung kann in einem am oder im Gerät angeordneten Speichermittel gespeichert sein und der Geräteträger oder der Adapter des Geräteträgers kann eine Leseeinrichtung aufweisen, mit der die Kennung aus dem Speichermittel des an dem Geräteträger angeordneten Geräts auslesbar ist. Bei dem Speichermittel kann es sich um einem RFID-Tag handeln, das mit einer als RFID-Leser ausgestalteten Leseeinrichtung ausgelesen werden kann. Alternativ kann es sich bei dem Speichermittel auch um einen Barcode oder QR-Code handeln (die die Kennung in codierter Form speichern), der mit einer als Barcode- bzw. QR-Code-Leser ausgestalteten Leseeinrichtung ausgelesen werden kann. Bei der Verwendung eines Gerätemagazins, wie es unten mit Bezug auf Fig. 5 beschrieben wird, kann auch eine solche Kennung verzichtet werden, wenn bekannt ist, welches Gerät sich wo in dem Gerätemagazin befindet. Vorteilhaft ist die Verwendung einer Kennung jedoch dann, wenn ein Gerät manuell an dem Geräteträger angeordnet ist. In diesem Fall kann das System automatisch ermitteln, welches Gerät dich an dem Geräteträger befindet.

Wenn bekannt ist, welches Gerät an dem Geräteträger angeordnet ist, kann eine Steuereinrichtung des Systems, etwa eine Steuereinrichtung des Fahrwagens oder eine außerhalb des Kanals angeordnete Steuereinrichtung die nicht benötigten Leitungen / Versorgungsleitungen automatisch deaktivieren. Die Steuereinrichtung kann hierzu so angepasst sein, dass sie eine unbeabsichtigte Aktivierung einer nicht benötigten Versorgungsleitung durch einen Bediener verhindert.

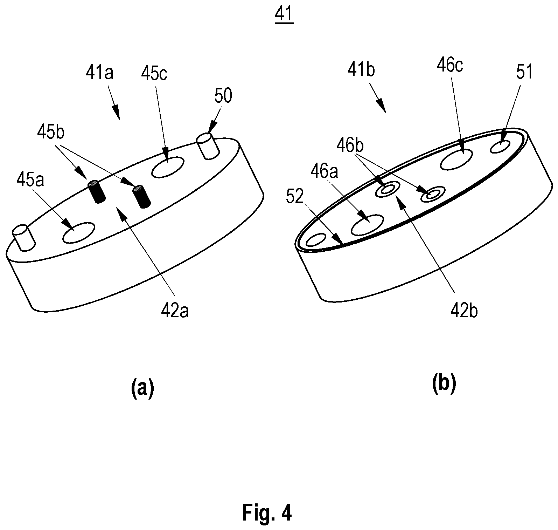

**Fig. 4** zeigt ein Adaptersystem 41 eines erfindungsgemäßen Geräteträgers gemäß einer weiteren Ausführungsform. Abbildung (a) zeigt schematisch einen ersten Adapter 41a des Werkzeugträgers und Abbildung (b) zeigt schematisch einen zweiten Adapter 41b des Gerätes.

Im Unterschied zu dem Fig. 3 gezeigten Adaptersystem, greifen hier die beiden Adapter 41a und 41b nicht ineinander. Aus diesem Grund kann es vorteilhaft sein, am Adapter 41a und/oder am Adapter 41b einen umlaufenden Dichtungsring vorzusehen.

Die Funktion und Wirkungsweise der beiden Schnittstellen 42a und 42b entspricht der Funktion und Wirkungsweise der beiden mit Bezug auf Fig. 3 beschriebenen Schnittstellen.

Im Unterschied zu dem in Fig. 3 beschriebenen Adaptersystem, sind hier an dem ersten Adapter 41a zwei axial hervorstehende Positionierzapfen 50 angeordnet, die in entsprechende Aussparungen 51 am zweiten Adapter 41b eingreifen.

Auch bei dem in Fig. 4 gezeigten Adaptersystem sind (hier nicht gezeigt) Arretiermittel vorgesehen, um den ersten Adapter am zweiten Adapter zu arretieren.

Das vorstehende beschriebene Geräteträger und das Adaptersystem samt dem Schnittstellensystem kann in vorteilhafter Weise verwendet werden, um unterschiedliche Geräte z.B. an einem Hebearm zu befestigen, ohne hierfür den Hebearm anpassen zu müssen. Besonders vorteilhaft sind sie jedoch, wenn die Geräte im Betrieb, wenn sich also das Inspektions- und/oder Wartungssystem im Kanal befindet, gewechselt werden müssen. Dies ist nunmehr möglich, ohne dass das Inspektions- und/oder Wartungssystem aus dem Kanal herausgefahren werden muss.

Gemäß einem weiteren Aspekt der Erfindung weist das Trägersystem, etwa ein Fahrwagen, ein Gerätemagazin zur Aufnahme einer Anzahl von Geräten auf.

Ein Trägersystem 5 mit einem daran angeordneten Gerätemagazin ist in Fig. 5 gezeigt, eine schematische Ansicht eines Gerätemagazins ist in Fig. 6 gezeigt.

Das Trägersystem 5, das hier als Fahrwagen ausgestaltet ist, weist einen Hebearm 20 auf, an dessen freien Ende ein Geräteträger 21 angeordnet ist, wie er vorstehend beschrieben worden ist. Der Geräteträger 21 weist einen ersten Adapter 41a auf, der dem vorstehend beschriebenen ersten Adapter entspricht. In dem Gerätemagazin 60 sind eine Anzahl von Geräten G angeordnet, wobei sich in Fig. 5 sieben Geräte in dem Gerätemagazin 60 befinden. Die Geräte jeweils einen zweiten Adapter 41b auf, der den vorstehend beschriebenen zweiten Adaptern entspricht.

Mittels des ersten Adapters 41a und des zweiten Adapters 41b kann ein Gerät an dem Geräteträger 21 lösbar befestigt werden, wobei es erfindungsgemäß möglich ist, dass das zu befestigende Gerät in dem Gerätemagazin 60 angeordnet ist.

Um mit dem am Hebearm angeordneten Geräteträger 21 ein Gerät aus dem Gerätemagazin 60 aufzunehmen, ist es erfindungsgemäß vorgesehen, dass der Hebearm 20 derart ausgestaltet ist, dass der daran angeordnete Geräteträger 21 zwischen einer Anzahl von Gerätewechselpositionen P1 und zumindest einer Geräteeinsatzposition P2 bewegbar ist. Bei n Geräten im Gerätemagazin 60 kann der Geräteträger 21 demnach n Gerätewechselpositionen P1 einnehmen.

Beim Gerätewechsel wird der Hebearm 20 mit einem am ersten Adapter 41a befestigten Gerät in eine erste Gerätewechselposition P1a bewegt, wobei der erste Adapter 41a ausgestaltet ist, in der ersten Gerätewechselposition P1a das am ersten Adapter 41a befestigte Gerät von dem ersten Adapter 41a zu lösen, d.h. das Gerät in das Gerätemagazin abzulegen. Die erste Gerätewechselposition P1a entspricht dabei einer Position im bzw. am Gerätemagazin, an der das Gerät im Magazin abgelegt wird.

Anschließend wird der Hebearm 20 ohne einem am ersten Adapter 41a befestigten Gerät in eine zweite Gerätewechselposition P1b bewegt ist, wobei der erste Adapter 41a ausgestaltet ist, in der zweiten Gerätewechselposition P1b ein im Gerätemagazin 60 aufgenommenes Gerät G an dem ersten Adapter 41a zu befestigen. Die zweite Gerätewechselposition P1b entspricht hierbei einer Position im bzw. am Gerätemagazin, an der sich das aufzunehmende Gerät im Magazin befindet.

Wie vorstehend beschrieben, weisen der erste Adapter 41a und der zweite Adapter 41b eine Arretiereinrichtung auf (hier nicht gezeigt), mit der ein an dem ersten Adapter 41a angeordnetes bzw. aus dem Gerätemagazin aufgenommenes Gerät G temporär an dem ersten Adapter arretierbar ist.

Die Arretiereinrichtung kann zumindest ein an dem ersten Adapter 41a angeordnetes steuerbares Arretiermittel umfasst, wobei das Arretiermittel bezüglich des Geräteträgers 21 zwischen einer Verriegelungsposition und einer Entriegelungsposition bewegbar ist. Beim Ablegen eines Gerätes in das Gerätemagazin wird das Arretiermittel von der Verriegelungsposition in die Entriegelungsposition gebracht, und somit das an dem Adapter 41a befestigte Gerät von dem Adapter 41a gelöst. Zum bzw. beim Aufnehmen eines Gerätes aus dem Gerätemagazin befindet sich das Arretiermittel in der Entriegelungsposition. Nachdem das Gerät an dem ersten Adapter 41a angeordnet worden ist, wird das Arretiermittel von der Entriegelungsposition in die Verriegelungsposition bewegt. Das Gerät ist nun fest mit dem Geräteträger verbunden. Die Arretiereinrichtung kann der oben mit Bezug auf Fig 2 beschriebenen Arretiereinrichtung entsprechen.

In einer Ausführungsform der Erfindung kann es vorgesehen sein, dass das Arretiermittel von der Verriegelungsposition in die Entriegelungsposition gebracht wird, wenn sich der Hebearm bzw. der Geräteträger nicht in einer Gerätewechselposition befindet. Wie oben erläutert, kann es sich beim Gerät um ein Gerät handeln, das nach einer Inspektion oder nach einer Wartung im Kanal verbleibt, beispielsweise Überwachungseinheiten oder dergleichen. Solche Geräte können ebenfalls in das Gerätemagazin aufgenommen werden und weisen vorteilhafterweise einen zweiten Adapter auf, wie oben beschrieben worden ist. Mit Hilfe des erfindungsgemäßen Geräteträgers 21 können solche Geräte aus dem Gerätemagazin entnommen und an einer vorbestimmten Stelle im Kanal abgelegt werden. Solche Geräte werden nachfolgen auch als "verlorene" Geräte bezeichnet.

Es kann vorteilhaft es sein, wenn auch verlorene Geräte eine eindeutige Kennung aufweisen, bzw. ein Speichermittel aufweisen, in dem eine eindeutige Kennung des Geräts gespeichert ist. In einer vorteilhaften Ausgestaltung handelt es sich bei dem Speichermittel um ein beschreibbares Speichermittel, etwa ein RFID-Tag. Mit einer am Geräteträger oder am Adapter des Geräteträgers angeordneten Leseeinrichtung kann die Kennung aus dem Speichermittel ausgelesen werden. In einer Ausgestaltung der Erfindung kann zusätzlich zur Leseeinrichtung auch eine Schreibeinrichtung am Geräteträger oder am Adapter des Geräteträgers vorgesehen sein (oder alternativ eine Schreib-/Leseeinrichtung) mit der Information in das Speichermittel geschrieben werden können. So kann das System beispielsweise beim Ablegen eines verlorenen Geräts im Kanal die Position des verlorenen Geräts im Kanal in das Speichermittel schreiben.

Vorteilhaft ist es, wenn in dem Gerätemagazin für jedes darin aufgenommene Gerät eine vorbestimmte Position innerhalb des Gerätemagazins vorgesehen ist. Eine Steuereinrichtung, mit der der Hebearm gesteuert wird, kann so den Hebearm selbständig (d.h. ohne menschlichen Eingriff) an die entsprechende Gerätewechselposition bewegen bzw. steuern und das dort abgelegte Gerät aufnehmen. Eine Bedienperson muss so an einer Eingabeeinrichtung nur mehr angeben, welches Gerät mit dem Geräteträger aufgenommen werden soll. Die Steuereinrichtung veranlasst dann automatisch das Ablegen des an dem Geräteträger befestigten Geräts in dem Gerätemagazin (sofern ein Gerät an dem Geräteträger befestigt ist) und nimmt automatisch das gewünscht Gerät aus dem Gerätemagazin auf.

Da auch für das in das Gerätemagazin abzulegende Gerät eine vorbestimmte Position in dem Gerätemagazin vorgesehen ist, kann die Steuereinrichtung den Hebearm auch an die entsprechende Gerätewechselposition bewegen bzw. steuern.

Anhand der vorstehend genannten Kennung kann gewährleistet werden, dass die Steuereinrichtung immer weiß, welche Gerät aktuell an dem Geräteträger angeordnet ist. Sofern Geräte ausschließlich aus dem Gerätemagazin aufgenommen werden, weiß die Steuereinrichtung auch ohne eine solche Kennung, welches Gerät sich aktuell am dem Geräteträger befindet.

Das Aufnehmen und Ablegen von Geräten aus dem bzw. in das Gerätemagazin kann so vollständig automatisiert erfolgen.

Das Gerätemagazin 60 weist optional für ein darin aufgenommenes Gerät G eine Sicherungseinrichtung auf (hier nicht gezeigt), mit der das Gerät nach Aufnahme in das Gerätemagazin 60 in dem Gerätemagazin 60 lösbar arretierbar ist. Die Sicherungseinrichtung gewährleistet, dass das Gerät im Betrieb der Kanalinspektions- und/oder Wartungseinrichtung nicht aus dem Gerätemagazin fällt, was beispielsweise aufgrund von Erschütterungen des Fahrtwagens der Fall sein könnte. Bei der Sicherungseinrichtung kann es beispielsweise um einen Magneten handeln. Die Sicherungseinrichtung kann aber auch Greifer oder Verriegelungseinrichtungen umfassen.

In einer vorteilhaften Ausgestaltung der Erfindung kann die Sicherungseinrichtung als steuerbare Sicherungseinrichtung ausgestaltet sein. Vorteilhafterweise ist sie derart steuerbar, dass ein Lösen einer Arretierung eines aus dem Gerätemagazin 60 mit dem Hebearm 20 zu entnehmenden Gerätes erst dann erfolgt, wenn das Gerät an dem ersten Adapter 41a befestigt ist. Ob das Gerät an dem ersten Adapter befestigt ist, kann anhand der dem ersten Adapter zugeordneten Arretiereinrichtung (zum Arretieren eines Geräts an dem ersten Adapter) festgestellt werden, insbesondere wenn es sich um eine steuerbare Arretiereinrichtung handelt.

Weiter ist es vorteilhaft, wenn die Sicherungseinrichtung derart steuerbar ist, dass ein Arretieren eines in das Gerätemagazin 60 abzulegenden Gerätes erfolgt, bevor das Gerät von dem ersten Adapter 41a gelöst wird. Die Steuereinrichtung des Fahrwagen kann hierzu so ausgestaltet sein, dass das Gerät von dem ersten Adapter 41a erst dann gelöst wird, wenn das Gerät in dem Gerätemagazin 60 arretiert ist.

In beiden Fällen wird so gewährleistet, dass sich ein Gerät zu keinem Zeitpunkt in einem ungesicherten Zustand befindet.

Der Hebearm 20 ist so ausgestaltet, dass der Geräteträger 21 hinsichtlich mehrerer Freiheitsgrade frei in einem Kanal oder Rohr positionierbar ist, d.h. in alle Richtungen bewegt werden kann. Vorteilhaft kann es zu dem sein, wenn der Geräteträger selbst drehbar und/oder schwenkbar an dem Hebearm angeordnet ist.

Eine Kombination des erfindungsgemäßen Gerätemagazins mit einem erfindungsgemäß Geräteträger und den entsprechenden Adaptern des Geräteträgers und der Geräte ermöglicht ein besonders effiziente Kanalinspektion und/oder Wartung. Alle benötigten Geräte (z.B. Inspektionskamera, Spüldüse, Fräse, verlorene Geräte, etc.) können mit dem Gerätemagazin mitgeführt werden. Mit dem Geräteträger kann das jeweils benötigte Gerät aus dem Gerätemagazin aufgenommen werden und mit dem vorstehend genannten Hebearm an jede beliebige Position gebracht werden.

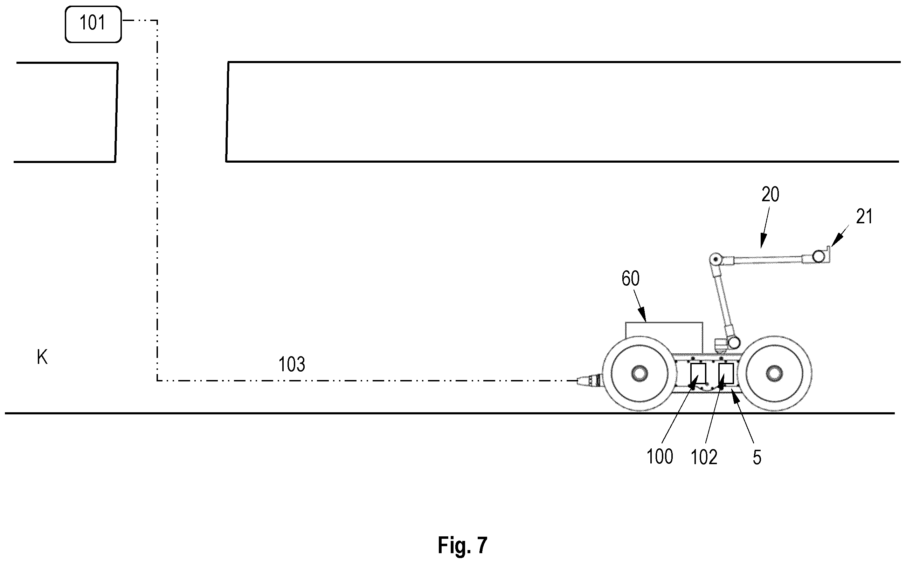

**Fig. 7** zeigt ein Blockdiagramm eines erfindungsgemäßen Kanalinspektions- und/oder Wartungssystems.

In einem Kanal K ist eine Inspektions- und/oder Wartungseinrichtung eines Inspektions- und/oder Wartungssystem angeordnet, die in dem Kanal verfahrbar ist. Die Inspektions- und/oder Wartungseinrichtung weist einen Fahrwagen 5 als Trägersystem auf, an dem ein gelenkig ausgestalteter Hebearm 20 angeordnet ist. Der Hebearm weist hier zwei Hebearmsegmente auf, die gelenkig miteinander gekoppelt, wobei die beiden Hebearmsegmente mittels eines Stellmittels relativ zueinander bewegbar sind. An dem freien Ende des Hebearms ist ein Geräteträger 21 angeordnet, der, wie vorstehend beschrieben, einen ersten Adapter aufweist, der wiederum steuerbare Arretiermittel zum Arretieren eines aufgenommenen Geräts aufweist. Das andere Ende des Hebearms ist schwenkbar und /oder drehbar an dem Fahrwagen angelenkt, wobei für das Schwenken / Drehen entsprechende Stellmittel vorgesehen sind. Der Fahrwagen kann eine Antriebssteuerung 102 aufweisen, mit der die Antriebseinheiten der Fahrwagenräder gesteuert werden können.

Das Inspektions- und/oder Wartungssystem weist hier ferner eine Bedieneinheit 101 auf, die über Kommunikationsverbindung 103 mit einer Steuereinrichtung 100 der Inspektions- und/oder Wartungseinrichtung gekoppelt ist. Die Kommunikationsverbindung 103 kann drahtgebunden oder drahtlos eingerichtet sein.

Die Steuereinrichtung 100 ist ihrerseits mit der Antriebssteuerung 102, mit dem Gerätemagazin 60, mit den Stellmitteln des Hebearms 20 bzw. der Hebearmsegmente und mit dem Geräteträger 21 gekoppelt bzw. verbunden. Mittels der Steuereinrichtung 100 kann der Adapter bzw. können die steuerbaren Arretiermittel des Adapters gesteuert werden. Das vorstehend beschriebene Wechseln eines Gerätes kann ebenfalls mittels der Steuereinrichtung 100 erfolgen. Ferner kann mittels der Steuereinrichtung 100 auch die Sicherungseinrichtung des Geräteträgers gesteuert werden, wie ebenfalls weiter oben beschrieben.

Die Steuereinrichtung 100 ist hier als Teil der Inspektions- und/oder Wartungseinrichtung gezeigt. In einer alternativen Ausgestaltung der Erfindung kann die Steuereinrichtung 100 auch Teil der Bedieneinheit sein, oder die Funktion der Steuereinrichtung 100 kann von der Bedieneinheit übernommen werden.

### Bezugszeichen der Erfindung

- 1: Kanalinspektions- und/oder Wartungssystem
- 5: Trägersystem (z.B. Fahrwagen oder Schiebeaal)
- 20: Hebearm des Trägersystems
- 21: Geräteträger
- 41: Adaptersystem
- 41a: erster Adapter des Geräteträgers 21
- 41b: zweiter Adapter des Gerätes G
- 42a: erste Schnittstelleneinrichtung des Geräteträgers 21
- 42b: zweite Schnittstelleneinrichtung des Geräts G
- 45a, 45b, 45c: erste Anschlüsse der ersten Schnittstelleneinrichtung 42a
- 46a, 46b, 46c: zweite Anschlüsse der zweiten Schnittstelleneinrichtung 42b
- 47a, 47b, 47c: trägersystemseitige Leitungen der ersten Anschlüsse 45a, 45b, 45c
- 50: Positionierzapfen
- 51: Aussparung für Positionierzapfen
- 52: Dichtung
- 60: Gerätemagazin
- 100: Steuervorrichtung des Trägersystems 5
- 101: Bedieneinheit
- 102: Antriebssteuerung
- 103: Kommunikationsverbindung
- DA: Drehachse
- G: Gerät bzw. Geräte (z.B. Kamera, Sensoren, Werkzeuge)
- K: Kanal
- P1, P1a, P1b: Gerätewechselpositionen
- P2: Geräteeinsatzposition

### Bezugszeichen zum Stand der Technik

- F: Fahrwagen
- H: Heber
- IK: Inspektionskamera

## Patentansprüche

1. Kanalinspektions- und/oder Wartungssystem (1), umfassend ein Trägersystem (5), insbesondere Fahrwagen, wobei
- an dem Trägersystem (5) ein Hebearm (20) angeordnet ist, an dessen freien Ende ein Geräteträger (21) angeordnet ist,
- der Geräteträger (21) einen ersten Adapter (41a) aufweist,
- der Hebearm (20) derart ausgestaltet ist, dass der daran angeordnete Geräteträger (21) zwischen einer Anzahl von Gerätewechselpositionen (P1) und zumindest einer Geräteeinsatzposition (P2) bewegbar ist,
- an dem Trägersystem (5) ein Gerätemagazin (60) zur Aufnahme einer Anzahl von Geräten angeordnet ist, wobei die Geräte jeweils einen zweiten Adapter (41b) aufweisen, die mit dem ersten Adapter (41a) des Geräteträgers (21) korrespondieren, wobei mittels des ersten Adapters (41a) und des zweiten Adapters (41b) eines Gerätes das Gerät an dem Geräteträger (21) lösbar befestigbar ist,
- der Hebearm (20) mit einem am ersten Adapter (41a) befestigten Gerät in eine erste Gerätewechselposition (P1a) bewegbar ist, wobei der erste Adapter (41a) ausgestaltet ist, in der ersten Gerätewechselposition (P1a) das am ersten Adapter (41a) befestigte Gerät von dem ersten Adapter (41a) zu lösen, und
- der Hebearm (20) ohne einem am ersten Adapter (41a) befestigten Gerät in eine zweite Gerätewechselposition (P1b) bewegbar ist, wobei der erste Adapter (41a) ausgestaltet ist, in der zweiten Gerätewechselposition (P1b) ein im Gerätemagazin (60) aufgenommenes Gerät (G) an dem ersten Adapter (41a) zu befestigen.

2. Kanalinspektions- und/oder Wartungssystem (1) nach dem vorhergehenden Anspruch, wobei dieses eine dem ersten Adapter (41a) und dem zweiten Adapter (41b) zugeordnete Arretiereinrichtung aufweist, mit der ein an dem ersten Adapter (41a) angeordnetes Gerät (G) temporär an dem ersten Adapter arretierbar ist.

3. Kanalinspektions- und/oder Wartungssystem nach dem vorhergehenden Anspruch, wobei die Arretiereinrichtung zumindest ein an dem ersten Adapter (41a) angeordnetes steuerbares Arretiermittel umfasst, wobei das Arretiermittel bezüglich des Geräteträgers (21) zwischen einer Verriegelungsposition und einer Entriegelungsposition bewegbar ist.

4. Kanalinspektions- und/oder Wartungssystem nach einem der vorhergehenden Ansprüche, wobei in dem Gerätemagazin (60) für jedes darin aufgenommene Gerät (G) eine vorbestimmte Position innerhalb des Gerätemagazins (60) vorgesehen ist.

5. Kanalinspektions- und/oder Wartungssystem nach einem der vorhergehenden Ansprüche, wobei das Gerätemagazin (60) für ein darin aufgenommenes Gerät (G) eine Sicherungseinrichtung aufweist, mit der das Gerät nach Aufnahme in das Gerätemagazin (60) in dem Gerätemagazin (60) lösbar arretierbar ist.

6. Kanalinspektions- und/oder Wartungssystem nach dem vorhergehenden Anspruch, wobei die Sicherungseinrichtung als steuerbare Sicherungseinrichtung ausgestaltet ist, die derart steuerbar, dass
- ein Lösen einer Arretierung eines aus dem Gerätemagazin (60) mit dem Hebearm (20) zu entnehmenden Gerätes erst erfolgt, wenn das Gerät an dem ersten Adapter (41a) befestigt ist, und
- ein Arretieren eines in das Gerätemagazin (60) mit dem Hebearm (20) abzulegenden Gerätes erfolgt, bevor das Gerät von dem ersten Adapter (41a) gelöst wird.

7. Kanalinspektions- und/oder Wartungssystem nach einem der vorhergehenden Ansprüche, wobei der Hebearm (20) so ausgestaltet ist, dass der Geräteträger (21) hinsichtlich mehrerer Freiheitsgrade frei in einem Kanal oder Rohr positionierbar ist.

8. Kanalinspektions- und/oder Wartungssystem (1), umfassend ein Trägersystem (5), insbesondere Fahrwagen, wobei an dem Trägersystem (5) ein Gerätemagazin (60) zur Aufnahme einer Anzahl von Geräten (G) angeordnet ist.

9. Kanalinspektions- und/oder Wartungssystem nach dem vorhergehenden Anspruch, wobei
- an dem Trägersystem (5) ein Hebearm (20) angeordnet ist, an dessen freien Ende ein Geräteträger (21) angeordnet ist,
- der Geräteträger (21) einen ersten Adapter (41a) aufweist,
- der Hebearm (20) derart ausgestaltet ist, dass der daran angeordnete Geräteträger (21) zwischen einer Anzahl von Gerätewechselpositionen (P1) und zumindest einer Geräteeinsatzposition (P2) bewegbar ist,
- die Geräte (G) jeweils einen zweiten Adapter (41b) aufweisen, die mit dem ersten Adapter (41a) des Geräteträgers (21) korrespondieren, wobei mittels des ersten Adapters (41a) und des zweiten Adapters (41b) eines Gerätes das Gerät an dem Geräteträger (21) lösbar befestigbar ist,
- der Hebearm (20) mit einem am ersten Adapter (41a) befestigten Gerät in eine erste Gerätewechselposition (P1a) bewegbar ist, wobei der erste Adapter (41a) ausgestaltet ist, in der ersten Gerätewechselposition (P1a) das am ersten Adapter (41a) befestigte Gerät von dem ersten Adapter (41a) zu lösen, und
- der Hebearm (20) ohne einem am ersten Adapter (41a) befestigten Gerät in eine zweite Gerätewechselposition (P1b) bewegbar ist, wobei der erste Adapter (41a) ausgestaltet ist, in der zweiten Gerätewechselposition (P1b) ein im Gerätemagazin (60) aufgenommenes Gerät (G) an dem ersten Adapter (41a) zu befestigen.
